# EUROPEAN PATENT SPECIFICATION

(11) **EP 3 579 075 B1**
(45) Date of publication and mention of the grant of the patent: **15.09.2021**
(21) Application number: 17895242.0
(22) Date of filing: 19.12.2017
(51) Int. Cl.: G05D 1/02, G05D 1/00, A01D 34/64

(54) **UNMANNED WORKING SYSTEM COMPRISING UNMANNED WORKING MACHINES AND SERVER COMPUTER**
UNBEMANNTE ARBEITSSYSTEM MIT ARBEITSMASCHINEN UND SERVERRECHNER
SYSTÈME DE COMMANDE COMPRENANT VEHICULES SANS PILOTE ET SERVEUR

(30) Priority: 31.01.2017 WO PCT/JP2017/003461
(43) Date of publication of application: 11.12.2019
(73) Proprietor: Honda Motor Co., Ltd., Tokyo 107-8556 (JP)
(72) Inventor: MATSUI, Yuki, Wako-shi, Saitama 351-0193 (JP); SHIMAMURA, Hideaki, Wako-shi, Saitama 351-0193 (JP)
(74) Representative: Weickmann & Weickmann PartmbB
(86) International application number: PCT/JP2017/045532
(87) International publication number: WO 2018/142791

(56) References cited:
- WO-A2-2015/022672
- JP-A- H0 937 632
- JP-A- H0 937 632
- JP-A- 2006 167 261
- JP-A- 2012 210 395
- JP-A- 2016 148 937
- JP-A- 2016 148 938
- JP-A- 2016 207 158
- JP-A- 2017 010 161

## Description

### [Technical Field]

The present invention relates to a technique for controlling a working operation of an unmanned working machine.

### [Background Art]

As unmanned working machines that automatically performs work while being navigated in an unmanned manner, an unmanned lawn mower (also referred to as a "robotic lawn mower" or an "autonomous lawn mower") that is autonomously navigated within a turf area and automatically performs lawn mowing work has been known (see Patent Literatures 1 to 3, for example).

### [Citation List]

### [Patent Literature]

[Patent Literature 1] Japanese Patent No. 5529947
[Patent Literature 2] U.S. Unexamined Patent Application Publication No. 2016/0302354
[Patent Literature 3] U.S. Unexamined Patent Application Publication No. 2014/0032033

JP H09 37632 A, on which the preamble of claim 1 is based, relates to a centralizes management for cutting the grass of a golf field.

WO 2015/022672 A2 shows a system for yard maintenance comprising a mowing robot and an offboard yard manager equipment whereby the robot is equipped with sensors that monitors soil conditions and adapted to collect and communicate information to the yard manager whereby the yard manager manages the geographical operation of the robot using a subdivision of the working parcel into zones and a map representation and defines operating adjustments of the robot based on these geographical data.

### [Summary of Invention]

### [Technical Problem]

Incidentally, the finished appearance of the lawn mowing work differs depending on the tracks (hereinafter referred to as "traveling patterns") described by the unmanned lawn mower in mowing a lawn. Generally, the traveling pattern to fill the turf area provides a more improved finished appearance.

Some parameters (hereinafter referred to as "traveling parameters") used to vary the traveling pattern are registered in advance in the unmanned lawn mower to enable a user to set the traveling parameters appropriately, so that the user can operate the unmanned lawn mower in the traveling pattern capable of obtaining a good finished appearance.

However, it is difficult to provide the optimal traveling pattern based on the traveling parameters set by the user. This problem occurs not only in the unmanned lawn mower but also in the unmanned working machine in which the user can set a setting parameter for setting the operation of the unmanned lawn mower.

The present invention has an object to provide an unmanned working system that enables an unmanned working machine to perform a proper operation, a server computer, and the unmanned working machine.

### [Solution to Problem]

The invention provides an unmanned working system according to claim 1.

In an aspect of the present invention the unmanned working system includes a plurality of the unmanned working machines that perform work while being navigated in an unmanned manner, and a server computer, each of the unmanned working machines communicating with the server computer. In the unmanned working system, each of the plurality of unmanned working machines includes an operation control unit that controls an operation based on a setting parameter, and a working operation information collection unit that collects working operation information on an operation of the work. The server computer includes a working operation information acquisition unit that acquires the working operation information from each of the unmanned working machines, and a setting specifying unit that specifies, for each of the unmanned working machines, a value of the setting parameter suitable for the work based on the working operation information. Each of the unmanned working machines controls an operation based on the value of the setting parameter specified by the server computer.

According to the aspect of the present invention, in the above-described unmanned working system, the working operation information includes first information on unmanned travel of each of the unmanned working machines, and the setting specifying unit specifies the value of the setting parameter suitable for the work based on the first information.

According to a further aspect of the present invention, in the above-described unmanned working system, the working operation information includes second information on a working area within which each of the unmanned working machines is navigated in an unmanned manner, and the setting specifying unit specifies the value of the setting parameter suitable for the work based on the second information.

According to the aspect of the present invention, in the above-described unmanned working system, each of the unmanned working machines further includes an evaluation information collection unit that collects working evaluation information used for working evaluation performed by the operation based on an optimal value of the setting parameter specified by the server computer. The server computer includes a setting correction unit that corrects the value of the setting parameter suitable for the work based on the working evaluation information of each of the unmanned working machines.

According to a further aspect of the present invention, in the above-described unmanned working system, the value of the setting parameter suitable for the work is a value for improving the work of the unmanned working machine.

According to the aspect of the present invention, in the above-described unmanned working system, the work of the unmanned working machine is lawn mowing work, and the first information includes the number of times the unmanned working machine travels straight in the lawn mowing work for a predetermined period of seconds, the number of collisions, and the number of times the unmanned working machine moves out of the working area within which the unmanned working machine is navigated in the unmanned manner.

According to a further aspect of the present invention, in the above-described unmanned working system, the work of the unmanned working machine is lawn mowing work, and the second information includes an area of the working area in which the unmanned working machine is navigated in the unmanned manner, and a length of a boundary of the area.

A possible realization concerns a server computer that controls an operation based on a setting parameter and communicates with each of a plurality of unmanned working machines that perform work while being navigated in an unmanned manner, the server computer including a working operation information acquisition unit that acquires working operation information on an operation of the work from each of the unmanned working machines, and a setting specifying unit that specifies, for each of the unmanned working machines, a value of the setting parameter suitable for the work based on the working operation information. The server computer transmits the value of the setting parameter suitable for the work to each of the unmanned working machines, and enables the unmanned working machine to control the operation based on the value of the setting parameter.

Another possible realization concerns an unmanned working machine that performs work while being navigated in an unmanned manner and communicates with a server computer, the unmanned working machine including an operation control unit that controls an operation based on a setting parameter, and a working operation information collection unit that collects working operation information on an operation of the work. The unmanned working machine acquires, from the server computer, a value of the setting parameter suitable for the work specified based on the working operation information, and controls the operation based on the value of the setting parameter.

### [Advantageous Effects of Invention]

According to an aspect of the present invention, the user enables an unmanned working machine to perform a proper working operation.

### [Brief Description of Drawings]

[Figure 1] Figure 1 is a diagram illustrating a configuration of an unmanned lawn mowing system according to the present embodiment.
[Figure 2] Figure 2 is a diagram schematically illustrating a configuration of an unmanned lawn mower.
[Figure 3] Figure 3 is a block diagram illustrating a functional configuration of a control unit included in the unmanned lawn mower.
[Figure 4] Figure 4 is a diagram illustrating an "A turning mode."
[Figure 5] Figure 5 is a diagram illustrating a "B turning mode."
[Figure 6] Figure 6 is a table showing an example of presets of traveling parameters.
[Figure 7] Figure 7 is a block diagram illustrating a functional configuration of a management server.
[Figure 8] Figure 8 is a table showing an example of an optimal setting specifying data.
[Figure 9] Figure 9 is a sequence diagram illustrating an operation of the unmanned lawn mowing system.
[Figure 10] Figure 10 is a flowchart of an optimal setting specifying process.
[Figure 11] Figure 11 is a block diagram illustrating a functional configuration of a control unit included in an unmanned lawn mower according to a first modification example.
[Figure 12] Figure 12 is a table showing an example of optimal setting specifying data according to the first modification example of the present invention.
[Figure 13] Figure 13 is a block diagram illustrating a functional configuration of a control unit included in an unmanned lawn mower according to a third modification example.
[Figure 14] Figure 14 is a block diagram illustrating a functional configuration of a management server according to the third modification example.

### [Description of Embodiments]

Hereinafter, embodiments of the present invention will be described with reference to drawings.

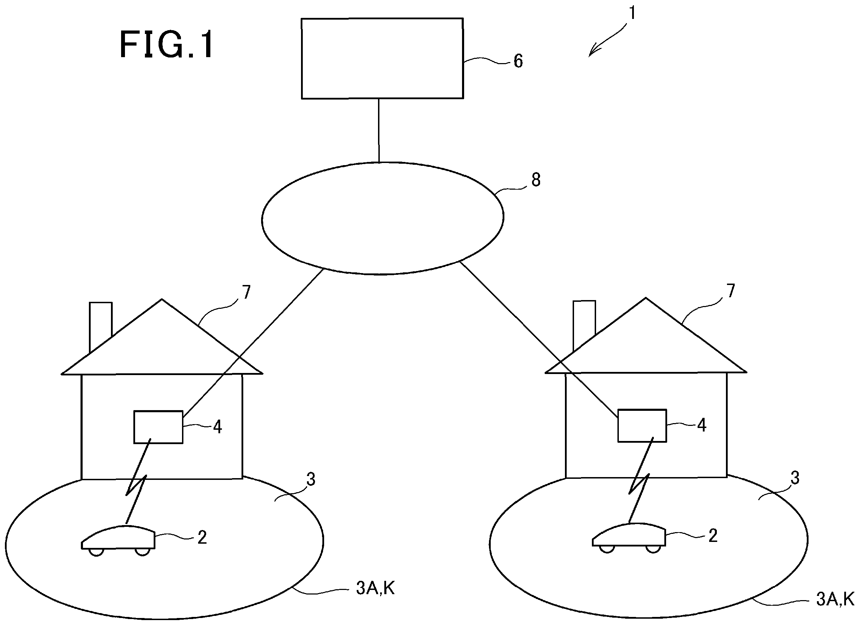

Figure 1 is a diagram illustrating a configuration of an unmanned lawn mowing system 1 according to the present embodiment.

The unmanned lawn mowing system 1 includes a plurality of unmanned lawn mowers 2, home terminals 4, and a management server 6.

The unmanned lawn mower 2 is an unmanned working machine of the autonomously navigating type that automatically performs work while being navigated in an unmanned manner (that is, autonomously). The unmanned lawn mower 2 automatically performs lawn mowing work while being navigated in an unmanned manner within a turf area 3 on which grass is grown. The home terminal 4 is an information processing device owned by a user of the unmanned lawn mower 2, and communicates with the management server 6 through a telecommunication circuit 8. As the home terminal 4, a personal computer installed in a house 7 or a smart phone is used, for example. The telecommunication circuit 8 is a public communication such as the internet, for example.

The home terminal 4 communicates bi-directionally with the unmanned lawn mower 2 by the short-range wireless communication. The home terminal of the present embodiment relays data transmitted and received between the unmanned lawn mower 2 and the management server 6 by the short-range wireless communication. For example, Bluetooth (registered trademark), IrDA, Wi-Fi, or the like is used for the short-range wireless communication.

The management server 6 is a server computer that manages the unmanned lawn mower 2, and transmits and receives various data to and from the unmanned lawn mower 2 through the telecommunication circuit 8 and the home terminal 4. The details of the management server 6 will be described later.

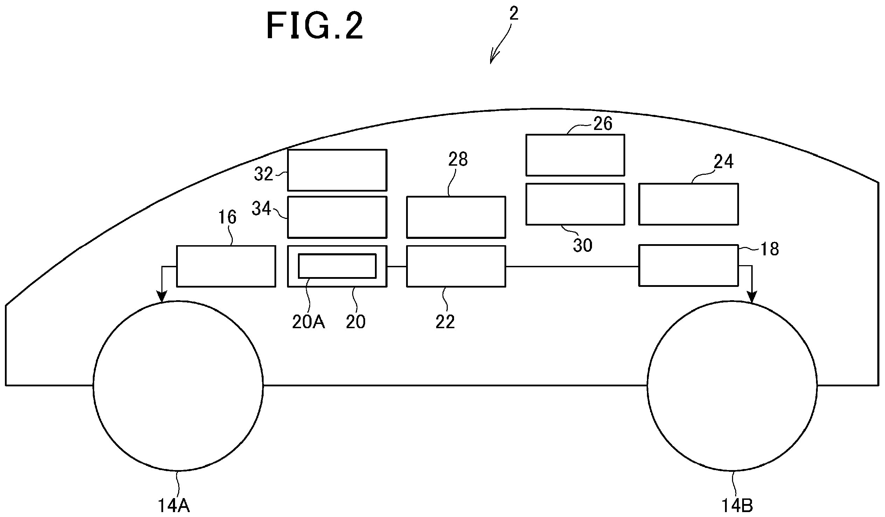

Figure 2 is a diagram schematically illustrating a configuration of the unmanned lawn mower 2.

The unmanned lawn mower 2 includes a box-shaped body 12, left and right steerable front wheels 14A provided on the front side of the body 12, and left and right rear wheels 14B as driving wheels on the rear side of the body 12. The body 12 includes a steering mechanism 16, a driving mechanism 18, a lawn mowing mechanism 20, an engine 22, a battery unit 24, a short-range wireless communication unit 26, a sensor unit 28, a control unit 30, an operation unit 32, and a display unit 34.

The steering mechanism 16 is a mechanism for steering the front wheels 14A, and includes a steering motor, and a gear transmission mechanism for turning the front wheels 14A in a left-right direction by the rotation of the steering motor. The driving mechanism 18 is a mechanism for driving the rear wheels 14B, and includes a power transmission mechanism for transmitting the power of the engine 22 to the rear wheels 14B to drive the rear wheels 14B. The lawn mowing mechanism 20 includes a blade (cutting blade) 20A, and a coupling mechanism for operatively coupling the blade 20A to the engine 22. The battery unit 24 includes a battery 24A, and supplies the electric power of the battery 24A to each unit such as the engine 22. The short-range wireless communication unit 26 is a unit for performing short-range wireless communication with the above-described home terminal 4. The sensor unit 28 includes various sensors required for the unmanned lawn mower 2 to be autonomously navigated within the turf area 3 while avoiding an obstacle (such as a house and tree). In the present embodiment, as illustrated in Figure 1, a boundary K of the turf area 3 is defined by a wire 3A buried in the ground. This wire 3A is energized to generate magnetism. The sensor unit 28 of the unmanned lawn mower 2 includes a magnetic sensor. The unmanned lawn mower 2 detects the boundary K of the turf area 3 based on the magnetism of the wire 3A detected by the magnetic sensor. Note that the sensor unit 28 also includes a sensor (contact detection sensor) for detecting an obstacle.

The control unit 30 is a device configured to control each unit provided in the body 12 to provide an autonomous lawn mowing operation, and is constituted of a computer including a processor such as CPU and MPU, and a storage device such as a memory for storing a computer program.

The operation unit 32 includes various operators (buttons, ten-key buttons, touch panel, and the like) for receiving an operation of the user, and outputs this operation to the control unit 30. The display unit 34 includes a display panel, and the like, and displays various kinds of information.

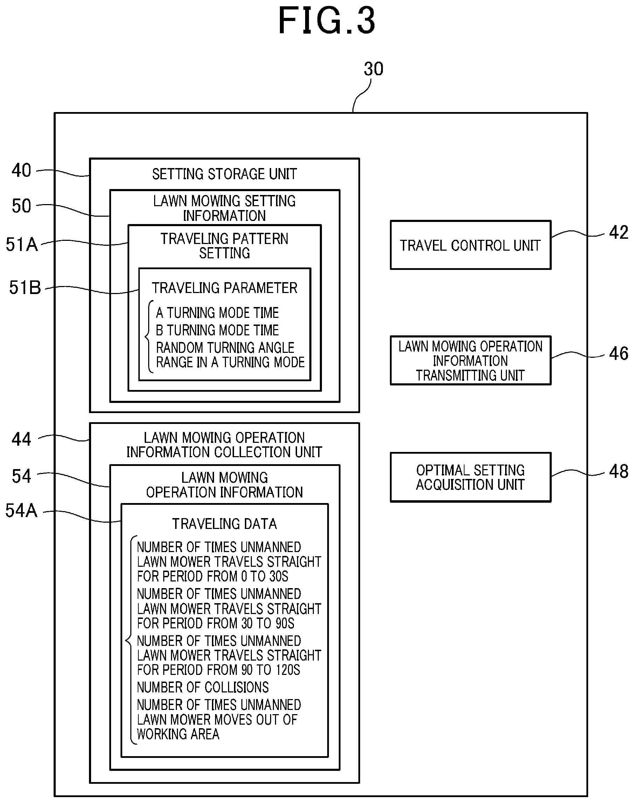

Figure 3 is a block diagram illustrating a functional configuration of the control unit 30.

The control unit 30 includes a setting storage unit 40, a travel control unit 42, a lawn mowing operation information collection unit 44, a lawn mowing operation information transmitting unit 46, and an optimal setting acquisition unit 48.

The setting storage unit 40 stores lawn mowing setting information 50 about the lawn mowing operation. In the present embodiment, the lawn mowing setting information 50 includes at least a traveling pattern setting 51A.

The traveling pattern setting 51A is a setting used to vary the traveling pattern during the lawn mowing operation, and includes traveling parameters 51B as setting parameters that can be set by the user. In the present embodiment, the traveling parameters 51B include the following three setting parameters. More specifically, the three setting parameters are "A turning mode time," "B turning mode time," and "random turning angle range in the A turning mode."

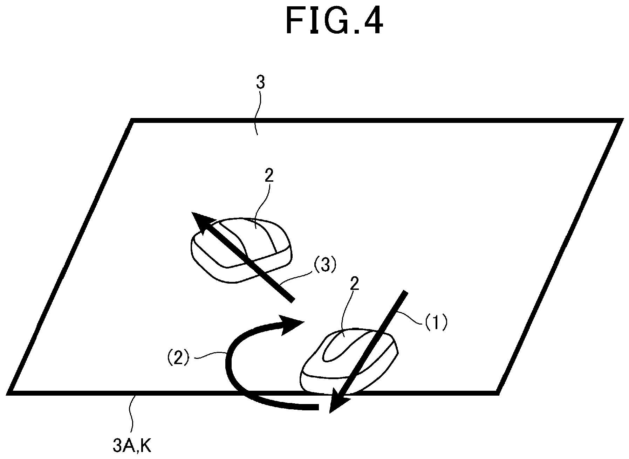

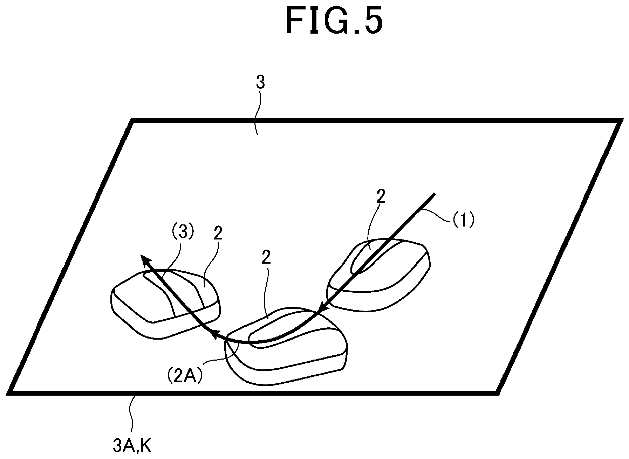

Figure 4 is a diagram illustrating the "A turning mode," and Figure 5 is a diagram illustrating the "B turning mode."

Each of the "A turning mode" and the "B turning mode" is an operation mode when the unmanned lawn mower 2 turns at the boundary K of the turf area 3. In the "A turning mode," the unmanned lawn mower 2 (1) travels forward toward the boundary K, (2) turns after moving across the boundary K, and (3) travels forward within the turf area 3, as illustrated in Figure 4. In contrast, in the "B turning mode," the unmanned lawn mower 2 (1) travels forward toward the boundary K, (2A) turns before moving across the boundary K or before reaching the boundary K, and (3) travels forward within the turf area 3, as illustrated in Figure 5.

Each of the "A turning mode time" and the "B turning mode time" is a setting parameter for setting a length of the time during which the unmanned lawn mower 2 operates in the corresponding operation mode in a single lawn mowing work of the unmanned lawn mower 2.

The "random turning angle range in the A turning mode" is a setting parameter for setting a turning angle when the unmanned lawn mower 2 turns in the "A turning mode." More specifically, when turning in the "A turning mode," the unmanned lawn mower 2 turns at a random turning angle. The possible range of the random turning angle is set as the "random turning angle range in the A turning mode."

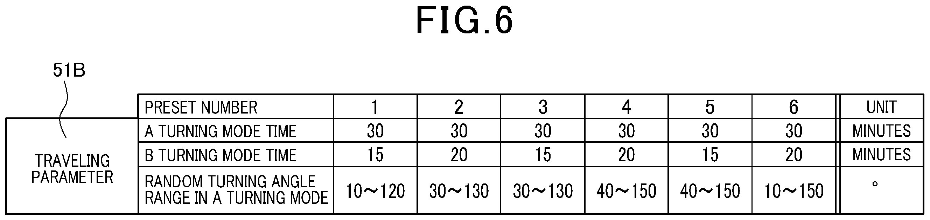

Figure 6 is a table showing an example of presets of the traveling parameters 51B.

A plurality of presets of the traveling parameters 51B shown in Figure 6 are registered in advance in the unmanned lawn mower 2 of the present embodiment. When the user sets the traveling parameters 51B, the user selects one of these presets to set the traveling parameters 51B of the selected preset.

The travel control unit 42 controls the travel according to the traveling pattern setting 51A during the lawn mowing operation.

The lawn mowing operation information collection unit 44 collects lawn mowing operation information 54. The lawn mowing operation information 54 is information on the lawn mowing operation of the unmanned lawn mower 2, and in the present embodiment, includes traveling data 54A.

The traveling data 54A is information on unmanned travel of the unmanned lawn mower 2, and the lawn mowing operation information collection unit 44 collects the traveling data 54A during the lawn mowing operation.

The traveling data 54A of the present embodiment includes the following five items. More specifically, the five items are "the number of times the unmanned lawn mower 2 travels straight for a period from 0 to 30 s," "the number of times the unmanned lawn mower 2 travels straight for a period from 30 to 90 s," "the number of times the unmanned lawn mower 2 travels straight for a period from 90 to 120 s," "the number of collisions," and "the number of times the unmanned lawn mower 2 moves out of the working area."

Each item of "the number of times the unmanned lawn mower 2 travels straight for a period from 0 to 30 s," "the number of times the unmanned lawn mower 2 travels straight for a period from 30 to 90 s," and "the number of times the unmanned lawn mower 2 travels straight for a period from 90 to 120 s" is the number of times the unmanned lawn mower 2 travels straight for a certain period during the lawn mowing operation for a predetermined period of time (for example, one hour). Note that in these items, "0 to 30 s" means "0 seconds to 30 seconds," "30 to 90 s" means "30 seconds to 90 seconds," and "90 to 120 s" means "90 seconds to 120 seconds."

The "number of collisions" means the number of collision of the unmanned lawn mower 2 with an obstacle or the like during the lawn mowing operation for a predetermined period of time.

The "number of times the unmanned lawn mower 2 moves out of the working area" means the number of times the unmanned lawn mower 2 moves across the boundary K of the turf area 3 during the lawn mowing operation for a predetermined period of time.

The lawn mowing operation information transmitting unit 46 transmits the information on the unmanned lawn mower 2 to the management server 6. This information includes the lawn mowing operation information 54.

The optimal setting acquisition unit 48 acquires, from the management server 6, the setting optimal for the lawn mowing setting information 50 of the unmanned lawn mower 2 (hereinafter referred to "optimal setting"), and sets the optimal setting to the lawn mowing setting information 50. In the present embodiment, the optimal setting acquisition unit 48 acquires an optimal preset of the traveling parameters 51B as the optimal setting, and sets such an optimal preset to the traveling parameters 51B.

Note that, in the present embodiment, the information is exchanged among the lawn mowing operation information transmitting unit 46, the optimal setting acquisition unit 48, and the management server 6 via communication through the home terminal 4.

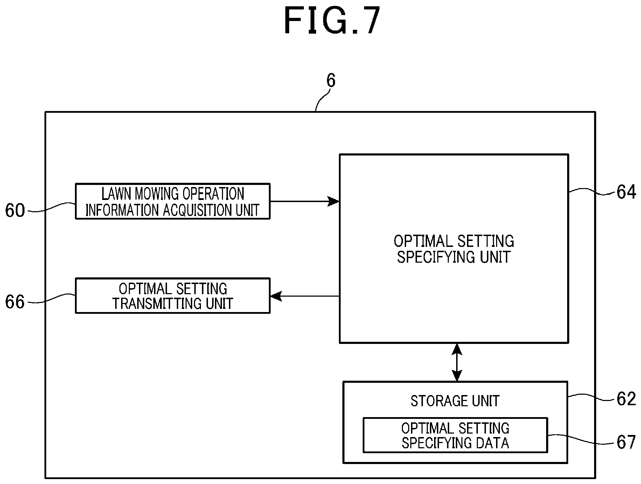

Figure 7 is a block diagram illustrating a functional configuration of the management server 6.

The management server 6 has a function of specifying the above-described optimal setting, and includes a lawn mowing operation information acquisition unit 60, a storage unit 62, an optimal setting specifying unit 64, and an optimal setting transmitting unit 66.

The lawn mowing operation information acquisition unit 60 acquires the above-described lawn mowing operation information 54 transmitted from each of the plurality of unmanned lawn mowers 2.

A storage unit 62 stores various kinds of data. In the present embodiment, the storage unit 62 stores at least optimal setting specifying data 67 in advance. The optimal setting specifying data 67 is data that specifies the correspondence between the lawn mowing operation information 54 and the above-described optimal setting.

The optimal setting specifying unit 64 specifies the above-described optimal setting based on the lawn mowing setting information 50 acquired from each of the plurality of unmanned lawn mowers 2 and the optimal setting specifying data 67.

The optimal setting transmitting unit 66 transmits the optimal setting to the unmanned lawn mowers 2 through the telecommunication circuit 8.

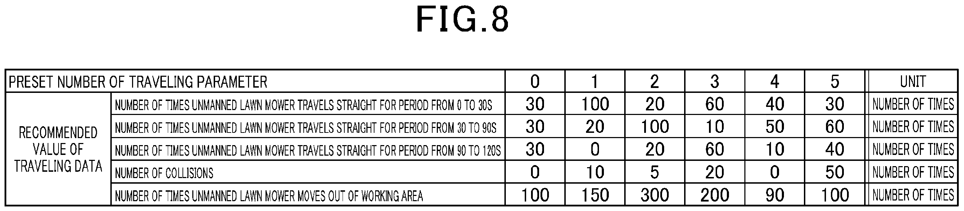

Figure 8 is a table showing an example of the optimal setting specifying data 67.

In the unmanned lawn mowing system 1 of the present embodiment, the optimal setting specifying data 67 specifies optimal values of the traveling parameters 51B according to the contents of the traveling data 54A, so that the optimal setting of the traveling parameters 51B in the lawn mowing setting information 50 is specified based on the traveling data 54A that is one of the lawn mowing operation information 54. As shown in Figure 8, the optimal setting specifying data 67 of the present embodiment specifies, for each of the presets of the traveling parameters 51B, recommended values of the traveling data 54A to which the corresponding preset is recommended to be applied. These recommended values are updated through the totaling and analysis of the lawn mowing setting information 50 acquired from each of the unmanned lawn mowers 2. As this updating unit, an artificial intelligence technique can be also used.

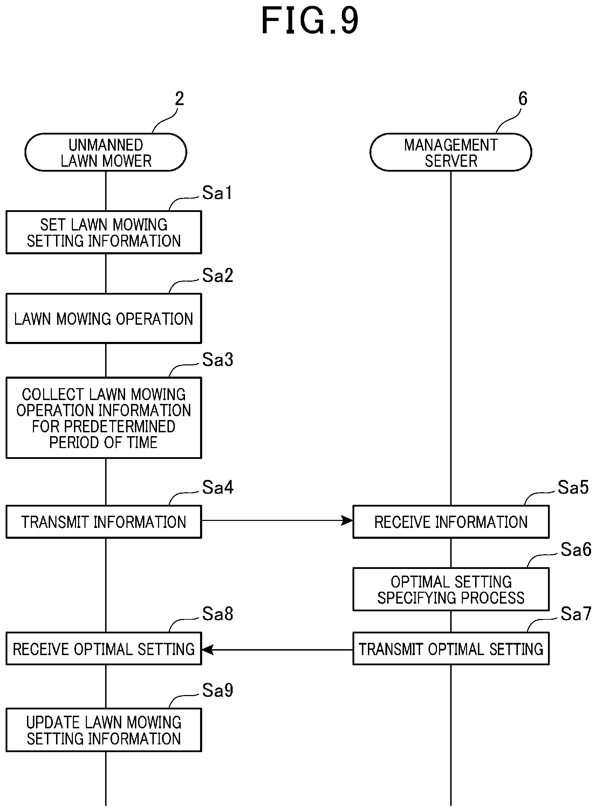

Figure 9 is a sequence diagram illustrating an operation of the unmanned lawn mowing system 1.

Before the unmanned lawn mower 2 performs the lawn mowing operation within the turf area 3, the user or the like sets the lawn mowing setting information 50 to the unmanned lawn mower 2 (step Sa1). In the present embodiment, the user selects one from the presets of the traveling parameters 51B to set the traveling parameters 51B of the selected preset.

Next, when the unmanned lawn mower 2 performs the lawn mowing operation (step Sa2), the unmanned lawn mower 2 collects the lawn mowing operation information 54 for a predetermined period of time (for example, one hour) (step Sa3), and transmits the lawn mowing operation information 54 to the management server 6 (step Sa4).

On the other hand, in the management server 6, when the lawn mowing operation information acquisition unit 60 acquires the lawn mowing operation information 54 transmitted from the unmanned lawn mower 2 (step Sa5), the optimal setting specifying unit 64 performs an optimal setting specifying process to specify an optimal setting (step Sa6), and the optimal setting transmitting unit 66 transmits the optimal setting to the unmanned lawn mower 2 (step Sa7). In the optimal setting specifying process, the optimal preset of the traveling parameters 51B is specified as the optimal setting based on the traveling data 54A and the optimal setting specifying data 67. The details of this optimal setting specifying process will be described later.

When receiving the optimal setting from the management server 6 (step Sa8), the unmanned lawn mower 2 updates and sets the lawn mowing setting information 50 based on the optimal setting (step Sa9). Thereafter, the unmanned lawn mower 2 performs the lawn mowing operation based on the updated and set lawn mowing setting information 50.

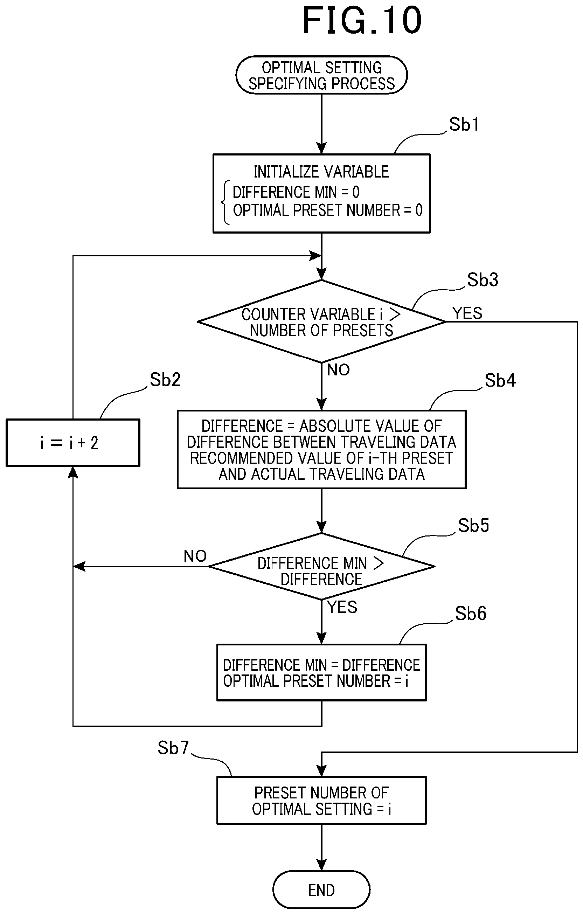

Figure 10 is a flowchart of the optimal setting specifying process performed by the optimal setting specifying unit 64.

As described above, the optimal setting specifying data 67 specifies, for each of the presets of the traveling parameters 51B, recommended values of the traveling data 54A to which the corresponding preset is recommended to be applied. In the optimal setting specifying process, the optimal setting specifying unit 64 specifies recommended values of the traveling data 54A that is the closest to the traveling data 54A acquired from the unmanned lawn mower 2, and specifies, as the optimal setting, the preset of the traveling parameters 51B corresponding to the specified recommended values of the traveling data 54A.

Note that in the optimal setting specifying process, the traveling data 54A acquired from the unmanned lawn mower 2 is referred to as "actual traveling data," and a recommended value of the traveling data 54A is referred to as a "traveling data recommended value."

As illustrated in Figure 10, in the optimal setting specifying process, variables are initialized (step Sb1). The main variables are a "difference MIN," and an "optimal preset number." The "difference MIN" stores a minimum value of the differences between the actual traveling data and each of the plurality of traveling data recommended values. The "optimal preset number" stores a preset number of the preset most suitable for the actual traveling data among the presets of the traveling data 54A.

Next, the traveling data recommended values of all of the presets of the traveling data 54A are compared with the actual traveling data to obtain differences between both.

Specifically, each time a counter variable i is incremented by one ("1") starting from "0" (step Sb2), the following process is performed until the counter variable i exceeds the number of presets of the traveling data 54A (step Sb3: YES).

That is, differences between the traveling data recommended values at the i-th preset and the traveling data are obtained (step Sb4). These differences are obtained as absolute values. When the differences are smaller than the difference MIN (step Sb5: YES), the differences are stored in the difference MIN, and the value of the counter variable i is stored in the optimal preset number (step Sb6).

As shown in Figure 8, since the number of presets in the present embodiment is six preset numbers from "0" to "5," the processes of steps Sb2 to Sb6 are performed until the counter variable i is "6." As a result of these processes, the value of the counter variable i stored in the optimal preset number represents the preset number of the preset of the traveling data 54A that is recommended to be applied to the actual traveling data, and therefore the value of the counter variable i is specified as the optimal setting (step Sb7).

According to the above-described present embodiment, the following effects can be achieved.

In the present embodiment, the management server 6 specifies, for each of the unmanned lawn mowers 2, an optimal setting of the traveling parameters 51B based on the lawn mowing operation information 54 of the corresponding unmanned lawn mower 2, and transmits the optimal setting to the corresponding unmanned lawn mower 2.

Thereby, even when the user does not set the traveling parameters 51B properly, the user makes it possible for the unmanned lawn mower 2 to perform the proper lawn mowing operation with troubling the user.

Since the management server 6 acquires the lawn mowing operation information 54 from each of the unmanned lawn mowers 2, the management server 6 can detect an individual malfunction or fault of each of the unmanned lawn mowers 2 based on the lawn mowing operation information 54 acquired from each of the unmanned lawn mowers 2. The detection result and the lawn mowing operation information 54 can facilitate identification of causes of the malfunction or fault, thereby aiding in the development of the unmanned lawn mower 2.

In the present embodiment, the lawn mowing operation information 54 includes the traveling data 54A on the unmanned travel of the unmanned lawn mower 2, and the management server 6 specifies the optimal setting of the traveling parameters 51B based on the traveling data 54A.

This traveling data 54A includes the number of times the unmanned lawn mower 2 travels straight for a predetermined period of seconds, the number of collisions, and the number of times the unmanned lawn mower 2 moves out of the turf area 3.

Since the management server 6 specifies the optimal setting of the traveling parameters 51B based on the corresponding traveling data 54A, the management server 6 can grasp the traveling state of each of the plurality of unmanned lawn mowers 2. Thereby, the management server 6 can manage faults that may occur in traveling of the unmanned lawn mowers 2, based on the lawn mowing operation information 54 acquired from each of the unmanned lawn mowers 2, and is thereby capable of aiding in the development of the next model of the unmanned lawn mower 2.

The above-described embodiment merely illustrates one aspect of the present invention, and modifications and applications can be arbitrarily made without departing from the gist of the present invention.

### (Modification example 1)

In the above-described embodiment, the optimal setting of the traveling parameters 51B is specified based on the traveling data 54A that is one of the lawn mowing operation information 54. In contrast, the optimal setting of the traveling parameters 51B may be specified based on another lawn mowing operation information 54.

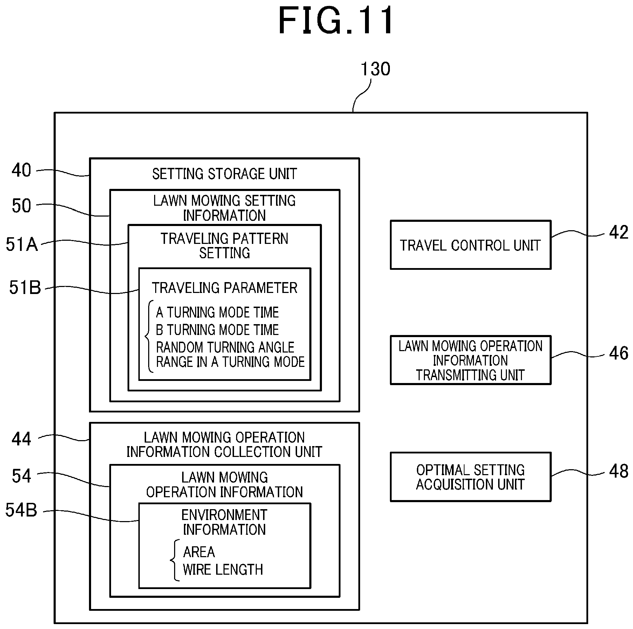

Figure 11 is a block diagram illustrating a functional configuration of a control unit 130 included in the unmanned lawn mower 2 according to this modification example. Note that in Figure 11 and the description of this modification example, components similar to those described in the above embodiment are provided with the same numerical references, and description thereof is omitted.

As illustrated in Figure 11, the configuration of the control unit 130 is different from the configuration of the present embodiment in that the lawn mowing operation information 54 includes environment information 54B.

The environment information 54B is information on the working environment of the lawn mowing work. The environment information 54B of the present embodiment includes information on the turf area 3 of one aspect of the working environment. Specifically, the environment information 54B includes an area, a wire length, and a shape.

The area is an area of the turf area 3. The wire length is the whole length of the wire provided along the boundary K of the turf area 3. The shape represents the complexity of the shape of the turf area 3. In the present embodiment, the complexity of the shape is represented by "simple" or "complex." For example, when the shape of the turf area 3 is represented by a single figure such as a circular shape or a polygonal shape, the complexity is "simple," and when the shape is represented by combining a plurality of figures, the complexity is "complex."

For example, the environment information 54B is set before the user uses the unmanned lawn mower 2.

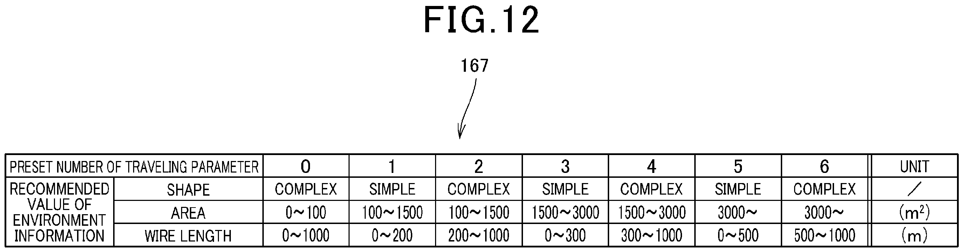

Figure 12 is a table showing an example of optimal setting specifying data 167 according to this modification example.

The storage unit 62 of the management server 6 according to the present embodiment stores the optimal setting specifying data 167 shown in Figure 12, instead of the optimal setting specifying data 67 of the present embodiment.

The optimal setting specifying data 167 is data that specifies the optimal values of the traveling parameters 51B in accordance with the contents of the environment information 54B. More specifically, as shown in Figure 12, the optimal setting specifying data 167 of the present embodiment specifies, for each of the presets of the traveling parameters 51B, recommended values of the environment information 54B to which the corresponding preset is recommended to be applied.

In the optimal setting specifying data 167 of the present embodiment, when the shape of the turf area 3 is complex, the B turning mode time in the predetermined working time is reduced, and the turning angle in the A turning mode is set to become shallower (smaller). On the other hand, when the shape of the turf area 3 is simple, the B turning mode time in the predetermined working time is increased, and the turning angle in the A turning mode is set to become steeper (larger).

Note that the contents of the preset for each preset number of the traveling parameters 51B are the same as those in the above-described embodiment.

The optimal setting specifying unit 64 of the management server 6 performs an optimal setting specifying process to specify an optimal setting in the presets of the traveling parameters 51B as an optimal setting, based on the environment information 54B acquired from the unmanned lawn mower 2 and the optimal setting specifying data 167.

This optimal setting specifying process is performed in a manner similar to that in the flowchart illustrated in Figure 10, except that the environment information 54B acquired from the unmanned lawn mower 2 and the recommended values of the environment information 54B for each of the presets of the traveling parameters 51B are used instead of the actual traveling data and the recommended traveling data.

According to this modification example, it is possible to specify the traveling parameters 51B optimal for the lawn mowing work within the turf area 3.

### (Modification example 2)

In the above-described embodiment, a configuration may be adopted in which the lawn mowing operation information 54 includes both of the traveling data 54A and the environment information 54B, and the optimal setting specifying unit 64 of the management server 6 may specify the optimal setting of the traveling parameters 51B based on both of the traveling data 54A and the environment information 54B.

In this case, in the optimal setting specifying process, the optimal setting specifying unit 64 specifies, as the optimal setting, the preset in which the sum of an absolute value of a difference in the traveling data 54A and an absolute values of a difference in the environment information 54B becomes minimum.

### (Modification example 3)

In the above-described embodiment, the effect achieved by setting the optimal setting to the unmanned lawn mower 2 may be evaluated, or the optimal setting of the management server 6 may be corrected based on the evaluation result.

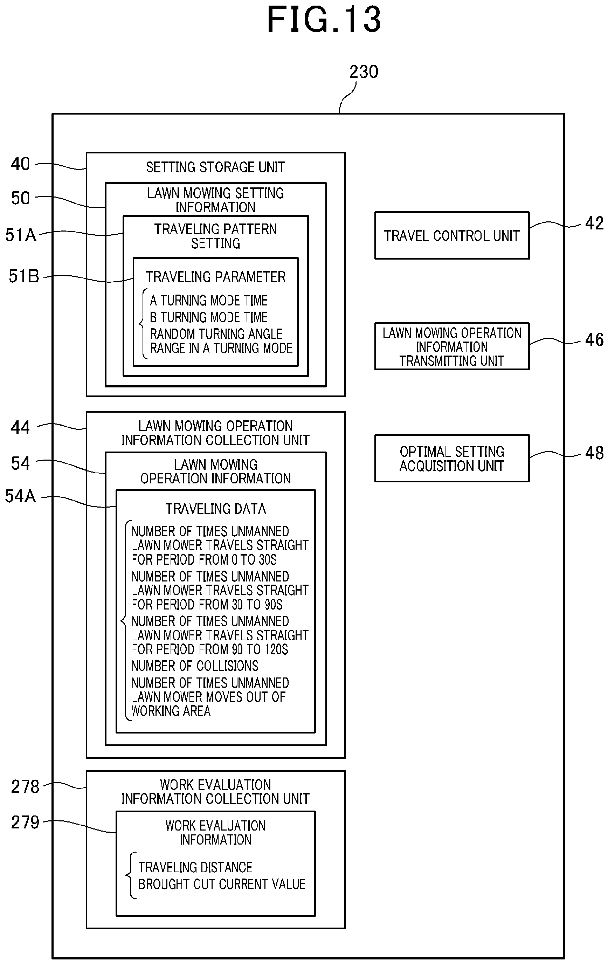

Figure 13 is a block diagram illustrating a functional configuration of a control unit 230 included in the unmanned lawn mower 2 according to this modification example. Note that in Figure 13 and the description of this modification example, components similar to those described in the above embodiment are provided with the same numerical references, and description thereof is omitted.

As illustrated in Figure 13, the configuration of the control unit 230 is different from the configuration of the present embodiment in that a work evaluation information collection unit 278 is provided.

The work evaluation information collection unit 278 collects work evaluation information 279. The work evaluation information 279 is information used for evaluation of the lawn mowing work performed by the operation based on the optimal setting of the traveling parameters 51B. This work evaluation information 279 is transmitted from the lawn mowing operation information transmitting unit 46 to the management server 6.

In this modification example, the work evaluation information 279 includes a traveling distance and a brought out current value. The traveling distance is a distance the unmanned lawn mower 2 travels in an unmanned manner during the lawn mowing work. The brought out current value is a current value output from the battery 24A in accordance with the lawn mowing work.

When during the lawn mowing work, the traveling distance for a certain period of time becomes longer and the brought out current value becomes smaller, the unmanned lawn mower 2 travels within the turf area 3 uniformly and efficiently. Therefore, the management server 6 can grasp based on the traveling distance and the brought out current value that the lawn mowing work is performed without uncut and efficiently.

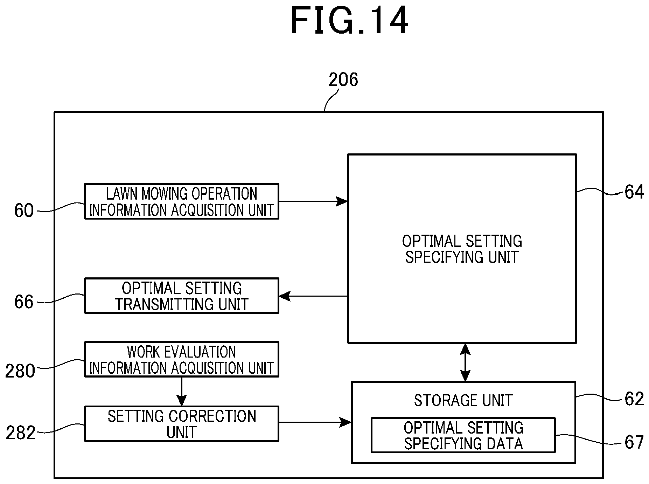

Figure 14 is a block diagram illustrating a functional configuration of a management server 206 according to this modification example.

As illustrated in Figure 14, the management server 206 includes a work evaluation information acquisition unit 280, and a setting correction unit 282.

The work evaluation information acquisition unit 280 acquires work evaluation information 279 from the unmanned lawn mower 2.

The setting correction unit 282 evaluates, based on the work evaluation information 279, whether the lawn mowing work has been improved by setting the optimal setting to the unmanned lawn mower 2, and corrects the optimal setting in accordance with this evaluation result. Specifically, when the traveling distance for a certain period of time becomes longer and the brought out current value does not become smaller, the setting correction unit 282 evaluates that the lawn mowing work is not improved. In this case, the setting correction unit 282 corrects the optimal setting corresponding to the measured values of the traveling data 54A by changing the recommended values associated with the traveling data 54A.

The management server 206 collects the work evaluation information 279 from each of a number of unmanned lawn mowers 2, and corrects the optimal setting based on the work evaluation information 279, and is thereby capable of obtaining the optimal setting with very high reliability.

Note that the above-described embodiment can be implemented by being combined as appropriate with any of the above-described modification examples.

In the embodiment and the modification examples, the unmanned lawn mower 2 is illustrated as an unmanned working machine that performs lawn mowing work while being navigated in an unmanned manner, but the present invention is not limited thereto. The present invention can be applied to any unmanned working machine that performs any work while being navigated in an unmanned manner.

### [Reference Signs List]

1 Unmanned lawn mowing system (unmanned working system)
2 Unmanned lawn mower (unmanned working machine)
3 Turf area (area)
3A Wire
6, 206 Management server (server computer)
20 Lawn mowing mechanism
20A Blade
30, 130, 230 Control unit
32 Operation unit
42 Travel control unit (operation control unit)
44 Lawn mowing operation information collection unit (working operation information collection unit)
48 Optimal setting acquisition unit (working operation information acquisition unit)
50 Lawn mowing setting information
51A Traveling pattern setting
51B Traveling parameter (setting parameter)
54 Lawn mowing operation information (working operation information)
54A Traveling data (working operation information)
54B Environment information (working operation information)
60 Lawn mowing operation information acquisition unit (working operation information acquisition unit)
64 Optimal setting specifying unit (setting specifying unit)
66 Optimal setting transmitting unit
67, 167 Optimal setting specifying data
278 Work evaluation information collection unit
279 Work evaluation information
280 Work evaluation information acquisition unit
282 Setting correction unit
K Boundary

## Claims

1. An unmanned working system, comprising:
a plurality of unmanned working machines (2) that perform lawn mowing work while being navigated in an unmanned manner; and
a server computer (6),
wherein each of the unmanned working machines (2) is adapted to communicate with the server computer (6),
each of the plurality of unmanned working machines (2) includes:
an operation control unit (42) which is adapted to control an operation based on a setting parameter (51B); and
a working operation information collection unit (44) which is adapted to collect working operation information (54, 54A, 54B) on an operation of the lawn mowing work,
the server computer (6) includes:
a working operation information acquisition unit (48, 60) which is adapted to acquire the working operation information (54, 54A, 54B) from each of the unmanned working machines(2); and
a setting specifying unit (64) which is adapted to specify, for each of the unmanned working machines (2), a value of the setting parameter (51B) suitable for the lawn mowing work based on the working operation information (54, 54A, 54B) of respective unmanned working machines (2),
each of the unmanned working machines (2) is adapted to control an operation based on the value of the setting parameter (51B) specified by the server computer,
the working operation information (54, 54A, 54B) includes first information (54A) on unmanned travel of each of the unmanned working machines (2), and
the setting specifying unit (64) is adapted to specify, for each of the unmanned working machines (2), the value of the setting parameter (51B) suitable for the lawn mowing work based on the first information of respective unmanned working machines (2), **characterized in that**
the first information (54A) includes
the number of times the unmanned working machine (2) travels straight in the lawn mowing work for a predetermined period of seconds, the number of collisions, and the number of times the unmanned working machine (2) moves out of the working (3) area within which the unmanned working machine (2) is navigated in the unmanned manner,
each of the unmanned working machines (2) further includes
an evaluation information collection unit (278) that is adapted to collect working evaluation information (279) used for evaluation of the lawn mowing work performed by the operation based on an optimal value of the setting parameter (51B) specified by the server computer (6), and
the server computer (6) includes
a setting correction unit (282) that is adapted to correct the value of the setting parameter (51B) suitable for the lawn mowing work based on the working evaluation information (279) obtained from each of the unmanned working machines (2).

2. The unmanned working system according to claim 1, wherein
the working operation information (54, 54A, 54B) includes second information (54B) on a working area (3) within which the unmanned working machines (2) is navigated in an unmanned manner, and
the setting specifying unit (64) is adapted to specify the value of the setting parameter (51B) suitable for the lawn mowing work based on the second information.

3. The unmanned working system according to claim 1 or 2, wherein
the value of the setting parameter (51B) suitable for the lawn mowing work is a value for improving the lawn mowing work of the unmanned working machine (2).

4. The unmanned working system according to claim 2, wherein
the second information includes an area of the working area (3) in which the unmanned working machine (2) is navigated in the unmanned manner, and a length of a boundary (K) of the area.

## Patentansprüche

1. Unbemanntes Arbeitssystem, welches aufweist:
eine Mehrzahl von unbemannten Arbeitsmaschinen (2), die Rasenmäharbeit durchführen, während sie unbemannt navigiert werden; und
einen Servercomputer (6),
wobei jede der unbemannten Arbeitsmaschinen (2) dazu ausgelegt ist, mit dem Servercomputer (6) zu kommunizieren,
wobei jede der Mehrzahl von unbemannten Arbeitsmaschinen (2) enthält:
eine Betriebssteuereinheit (42), die dazu ausgelegt ist, basierend auf einem Einstellparameter (51B) einen Betrieb zu steuern; und
eine Arbeitsbetriebsinformation-Sammeleinheit (44), die dazu ausgelegt ist, Arbeitsbetriebsinformation (54, 54A, 54B) zu einem Betrieb der Rasenmäharbeit zu sammeln,
wobei der Servercomputer (6) enthält:
eine Arbeitsbetriebsinformation-Erfassungseinheit (48, 60), die dazu ausgelegt ist, die Arbeitsbetriebsinformation (54, 54A, 54B) von jeder der unbemannten Arbeitsmaschinen (2) zu erfassen; und
eine Einstellspezifizierungseinheit (64), die dazu ausgelegt ist, um für jede der unbemannten Arbeitsmaschinen (2), einen Wert des Einstellparameters (51B), der für die Rasenmäharbeit geeignet ist, basierend auf der Arbeitsbetriebsinformation (54, 54A, 54B) der jeweiligen unbemannten Arbeitsmaschinen (2) zu spezifizieren,
wobei jede der unbemannten Arbeitsmaschinen (2) dazu ausgelegt ist,
einen Betrieb basierend auf dem vom Servercomputer spezifizierten Wert des Einstellparameters (51B) zu steuern,
wobei die Arbeitsbetriebsinformation (54, 54A, 54B) erste Information (54A) zu unbemannter Fahrt jeder der unbemannten Arbeitsmaschinen (2) enthält, und
die Einstellspezifizierungseinheit (64) dazu ausgelegt ist, für jede der unbemannten Arbeitsmaschinen (2) den Wert des Einstellparameters (51B), der für die Rasenmäharbeit geeignet ist, basierend auf der ersten Information jeweiliger unbemannter Arbeitsmaschinen (2) zu spezifizieren,
**dadurch gekennzeichnet, dass**
die erste Information (54A) enthält:
die Häufigkeit, mit der die unbemannte Arbeitsmaschine (2) bei der Rasenmäharbeit für eine vorbestimmte Dauer von Sekunden geradeausfährt, die Anzahl von Kollisionen und die Häufigkeit, mit der sich die unbemannte Arbeitsmaschine (2) aus dem Arbeitsbereich (3), in dem die unbemannte Arbeitsmaschine (2) unbemannt navigiert wird,
hinausbewegt
wobei jede der unbemannten Arbeitsmaschinen (2) ferner enthält:
eine Bewertungsinformation-Sammeleinheit (278), die dazu ausgelegt ist, Arbeitsbewertungsinformation (279), die zur Bewertung der durch den Betrieb durchgeführten Rasenmäharbeit verwendet wird, basierend auf einem vom Servercomputer (6) spezifizierten optimalen Wert des Einstellparameters (51B) zu sammeln, und
der Servercomputer (6) enthält:
eine Einstellkorrektureinheit (282), die dazu ausgelegt ist, den Wert des Einstellparameters (51B), der für die Rasenmäharbeit geeignet ist,
basierend auf der von jeder der unbemannten Arbeitsmaschinen (2) erhaltenen Arbeitsbewertungsinformation (279) zu korrigieren.

2. Das unbemannte Arbeitssystem nach Anspruch 1, wobei
die Arbeitsbetriebsinformation (54, 54A, 54B) zweite Information (54B) zu einem Arbeitsbereich (3), in dem die unbemannten Arbeitsmaschinen (2) unbemannt navigiert werden, enthält, und
die Einstellspezifizierungseinheit (64) dazu ausgelegt ist, den für die Rasenmäharbeit geeigneten Wert des Einstellparameters (51B) basierend auf der zweiten Information zu spezifizieren.

3. Das unbemannte Arbeitssystem nach Anspruch 1 oder 2, wobei der für die Rasenmäharbeit geeignete Wert des Einstellparameters (51B) ein Wert ist, um die Rasenmäharbeit der unbemannten Arbeitsmaschine (2) zu verbessern.

4. Das unbemannte Arbeitssystem nach Anspruch 2, wobei
die zweite Information eine Fläche des Arbeitsbereichs (3), in dem die unbemannte Arbeitsmaschine (2) unbemannt navigiert wird, sowie eine Länge einer Grenze (K) der Fläche enthält.

## Revendications

1. Système de travail télécommandé, comprenant
une pluralité de machines de travail télécommandées (2) qui effectuent un travail de tonte de pelouse tout en étant naviguées de manière télécommandée ; et un ordinateur serveur (6),
dans lequel chacune des machines de travail télécommandées (2) est adaptée pour communiquer avec l'ordinateur serveur (6),
dans lequel chacune de la pluralité de machines de travail télécommandées (2) comprend :
une unité de commande d'opération (42) qui est adaptée pour commander une opération sur la base d'un paramètre de réglage (51B) ; et
une unité de collecte d'informations d'opération de travail (44) qui est adaptée pour collecter des informations d'opération de travail (54, 54A, 54B) d'une opération du travail de tonte de gazon, l'ordinateur serveur (6) comprend :
une unité d'acquisition d'informations d'opération de travail (48, 60) qui est adaptée pour acquérir les informations d'opération de travail (54, 54A, 54B) à partir de chacune des machines de travail télécommandées (2) ; et
une unité de spécification de réglage (64) qui est adaptée pour spécifier, pour chacune des machines de travail télécommandées (2), une valeur du paramètre de réglage (51B) appropriée pour le travail de tonte de pelouse sur la base des informations d'opération (54, 54A, 54B) des machines de travail télécommandées respectives (2),
chacune des machines de travail télécommandées (2) est adaptée pour commander une opération sur la base de la valeur du paramètre de réglage (51B) spécifié par l'ordinateur serveur,
les informations d'opération de travail (54, 54A, 54B) comprennent des premières informations (54A) sur le déplacement télécommandé de chacune des machines de travail télécommandées (2), et
l'unité de spécification de réglage (64) est adaptée pour chacune des machines de travail télécommandées (2), la valeur du paramètre de réglage (51B) convenant pour le travail de tonte de gazon sur la base des premières informations des machines de travail télécommandées respectives (2),
**caractérisé en ce que**
les premières informations (54A) comprennent le nombre de fois où la machine de travail télécommandée (2) se déplace en ligne droite dans le travail de tonte de pelouse pendant une période prédéterminée de secondes, le nombre de collisions, et le nombre de fois où la machine de travail télécommandée (2) sort de la zone de travail (3) dans laquelle la machine de travail télécommandée (2) est naviguée de manière télécommandée,
chacune des machines de travail télécommandées (2) comprend en outre une unité de collecte d'informations d'évaluation (278) qui est adaptée pour collecter des informations d'évaluation de travail (279) utilisées pour l'évaluation du travail de tonte de pelouse effectué par l'opération sur la base d'une valeur optimale du paramètre de réglage (51B) spécifié par l'ordinateur serveur (6), et
l'ordinateur serveur (6) comprend une unité de correction de réglage (282) qui est adaptée pour corriger la valeur du paramètre de réglage (51B) approprié pour le travail de tonte de pelouse sur la base des informations d'évaluation de travail (279) obtenues de chacune des machines de travail télécommandées (2).

2. Système de travail télécommandé selon la revendication 1, dans lequel les informations d'opération de travail (54, 54A, 54B) comprennent des deuxièmes informations (54B) sur une zone de travail (3) à l'intérieur de laquelle les machines de travail télécommandées (2) naviguent de manière télécommandée, et l'unité de spécification de réglage (64) est adaptée pour spécifier la valeur du paramètre de réglage (51B) approprié pour le travail de tonte de gazon sur la base des deuxièmes informations.

3. Système de travail télécommandée selon la revendication 1 ou 2, dans lequel la valeur du paramètre de réglage (51B) convenant pour le travail de tonte de la pelouse est une valeur permettant d'améliorer le travail de tonte de la pelouse de la machine de travail télécommandée (2).

4. Système de travail télécommandé selon la revendication 2, dans lequel les deuxièmes informations comprennent une zone de la zone de travail (3) dans laquelle la machine de travail télécommandée (2) est naviguée de manière télecommandée, et une longueur d'une limite (K) de la zone.
